# EUROPEAN PATENT APPLICATION

(11) **EP 4 706 480 A1**
(43) Date of publication of application: **11.03.2026**
(21) Application number: 24842087.9
(22) Date of filing: 06.06.2024
(51) Int. Cl.: A47L 9/28

(54) **PORTABLE DUST COLLECTION APPARATUS**

(30) Priority: 18.07.2023 CN 202310884596
(71) Applicant: Nanjing Chervon Industry Co., Ltd., Nanjing, Jiangsu 211106 (CN)
(72) Inventor: JU, Jiadi, Nanjing, Jiangsu 211106 (CN); CHEN, Zhijun, Nanjing, Jiangsu 211106 (CN)
(74) Representative: Sun, Yiming
(86) International application number: PCT/CN2024/097658
(87) International publication number: WO 2025/016087

(57) **Abstract**

The present application discloses a portable suction device. The portable suction device includes a housing; a motor, including blades capable of generating negative pressure, a central axis of the motor being a motor axis; a suction pipe, for absorbing foreign objects and guiding them to a dust container for containing the foreign objects; the portable suction device is powered by a battery pack; the housing is cuboid-shaped; a thickness of the portable suction device along a front-rear direction is less than or equal to 85mm. Thereby, the overall thickness of the portable suction device is small. This not only results in the portable suction device occupying less space in the vehicle, facilitating storage, but also makes it convenient for users to hold the portable suction device to perform suction operations in relatively crowded environments inside the vehicle, thereby providing a higher user experience.

## Description

This application claims priority to Chinese Patent Application No. 202310884596.5, filed on July 18, 2023, with the China National Intellectual Property Administration, the entire content of which is incorporated herein by reference.

### TECHNICAL FIELD

The present application relates to a suction device, and specifically to a portable suction device.

### BACKGROUND

A known type of vehicle vacuum cleaner in the related art is used inside a vehicle to adsorb dust and other foreign objects within the vehicle, thereby achieving the purpose of maintaining a clean environment inside the vehicle.

Existing vehicle vacuum cleaners include multiple components such as a battery pack for power supply and a suction pipe for guiding dust, resulting in a relatively large overall volume and thickness of the vehicle vacuum cleaner. This not only occupies significant space within the vehicle, making it inconvenient for storage, but also makes it difficult for users to hold the vehicle vacuum cleaner to perform suction operations in relatively crowded environments inside the vehicle.

This section provides background information related to the present application, which is not necessarily prior art.

### SUMMARY

The present application adopts the following technical solutions:
A portable suction device, including: a housing; a battery pack mounting portion for installing a battery pack; a dust container, disposed within the housing; a suction pipe, one end of the suction pipe connected to the dust container, another end of the suction pipe extending out of the housing; wherein a thickness of the portable suction device along a front-rear direction is less than or equal to 65mm.

A portable suction device, including: a housing; a battery pack mounting portion, formed by a portion of the housing recessed inward; a battery pack, installed in the battery pack mounting portion; a dust container, disposed within the housing; a suction pipe, one end of the suction pipe connected to the dust container, another end of the suction pipe extending out of the housing; wherein the portable suction device further includes: a clamping member, installed on the housing, and configured to be capable of clamping and fixing the portable suction device to an external structure.

A portable suction device, including: a housing; a motor, disposed within the housing; a dust container, disposed within the housing; a suction pipe, one end of the suction pipe connected to the dust container, another end of the suction pipe extending out of the housing; wherein the portable suction device further includes: a battery pack mounting portion, the battery pack mounting portion being capable of installing at least a first battery pack or a second battery pack, wherein at least electrical parameters of the first battery pack and the second battery pack are different.

A portable suction device, including: a housing; a motor, disposed within the housing; a dust container, disposed within the housing; a suction pipe, one end of the suction pipe connected to the dust container, another end of the suction pipe extending out of the housing; a battery pack mounting portion, configured to install a battery pack; wherein projections of the motor, the dust container, the suction pipe, and the battery pack within a vertical plane perpendicular to the front-rear direction do not overlap.

The present application provides a portable suction device, including: a housing; a motor, including blades capable of generating negative pressure, a central axis of the motor being a motor axis; a suction pipe, for absorbing foreign objects and guiding them to a dust container for containing the foreign objects; wherein the portable suction device is powered by a battery pack; the housing is cuboid-shaped; a thickness of the portable suction device along the front-rear direction is less than or equal to 85mm.

In some embodiments, a radial dimension of the motor is less than or equal to 50mm.

In some embodiments, the housing at least accommodates the motor and the battery pack.

In some embodiments, a length of the portable suction device along a left-right direction is less than or equal to 300mm.

In some embodiments, a height of the portable suction device along an up-down direction is less than or equal to 250mm.

In some embodiments, the portable suction device further includes a connector disposed on the housing, the connector for connecting the dust container and the suction pipe.

In some embodiments, a portion of the housing is recessed inward to form an accessory mounting portion, the accessory mounting portion for mounting at least one suction accessory, the suction accessory being capable of being mounted to another end of the suction pipe.

In some embodiments, an output power of the portable suction device at a maximum speed level is greater than or equal to 50W and less than or equal to 200W.

In some embodiments, the portable suction device further includes a battery pack mounting portion for installing the battery pack, the battery pack mounting portion being capable of installing at least a first battery pack or a second battery pack, wherein electrical parameters of the first battery pack and the second battery pack are different.

In some embodiments, the portable suction device further includes a clamping member, installed on the housing, and configured to be capable of clamping and fixing the portable suction device to an external structure.

In some embodiments, the clamping member is detachably connected to the housing.

In some embodiments, the portable suction device further includes a battery pack mounting portion for installing the battery pack, the battery pack powering the portable suction device; wherein projections of at least two of the motor, the dust container, the battery pack, and the suction pipe within a vertical plane perpendicular to the front-rear direction do not overlap.

In some embodiments, the portable suction device further includes a battery pack mounting portion for installing the battery pack, the battery pack powering the portable suction device; the dust container includes a dust cover, the dust cover being openable or closable to remove dust from the dust container; wherein projections of at least two of the motor, the dust container, the battery pack, and the suction pipe on an outer surface of the dust cover do not overlap.

In some embodiments, a central axis of the motor is a motor axis, a central axis of the dust container is a dust container axis, the motor axis is perpendicular to the front-rear direction of the portable suction device, and the dust container axis is perpendicular to the motor axis.

In some embodiments, the portable suction device further includes an accessory mounting portion, configured to mount a suction accessory; wherein when the suction pipe is stored in the housing, it at least partially covers the accessory mounting portion.

In some embodiments, a maximum depth of the dust container along the front-rear direction is greater than or equal to 30mm and less than or equal to 80mm.

In some embodiments, defining a volume within an outer boundary of the housing as a total volume of the portable suction device, the total volume is less than or equal to 4500 cubic centimeters.

In some embodiments, the portable suction device is formed by connecting a device body and the suction pipe, the device body at least including the housing, the battery pack, and the motor, and a mass of the device body is less than or equal to 3kg.

In some embodiments, the dust container includes a dust outlet for discharging foreign objects, an area of the dust outlet is greater than or equal to 3500 square millimeters, and a plane in which the dust outlet lies is perpendicular to the front-rear direction.

In some embodiments, a numerical value of a ratio of the area of the dust outlet of the dust container to the maximum depth of the dust container along the front-rear direction is greater than or equal to 80.

In one embodiment, a portable suction device, including: a device body, including a motor, a battery pack, and a housing, the motor being rotatable about a motor axis, the motor being disposed within the housing; the device body further forming or being connected to a dust container, the dust container for collecting adsorbed foreign objects; a suction pipe, including an air inlet portion for inflow of external air, wherein air flows from the air inlet portion into the suction pipe, then through the suction pipe to the dust container; wherein the dust container includes a dust outlet for discharging foreign objects, an area of the dust outlet is greater than or equal to 3500 square millimeters; a minimum value among maximum thicknesses of the portable suction device in any direction is less than or equal to 65mm.

In some embodiments, the area of the dust outlet is greater than or equal to 4500 square millimeters.

In some embodiments, defining a maximum depth of the dust container as a dust container depth T1, a ratio of the dust container depth T1 to a thickness T of the portable suction device along the dust container depth direction is greater than or equal to 0.7 and less than or equal to 1.1.

In some embodiments, the portable suction device further includes a battery pack mounting portion for engaging the battery pack, the battery pack powering the portable suction device, wherein projections of at least two of the motor, the dust container, and the battery pack within a vertical plane perpendicular to the front-rear direction do not overlap.

A portable suction device, including: a device body, including a motor, a battery pack, and a housing, the motor being rotatable about a motor axis, the motor being disposed within the housing; the device body further forming or being connected to a dust container, the dust container for collecting adsorbed foreign objects; a suction pipe, including an air inlet portion for inflow of external air, wherein air flows from the air inlet portion into the suction pipe, then through the suction pipe to the dust container; wherein a minimum value among maximum thicknesses of the portable suction device in any direction is less than or equal to 85mm; defining a maximum depth of the dust container as a dust container depth T1, a ratio of the dust container depth T1 to a thickness T of the portable suction device along the dust container depth direction is greater than or equal to 0.7 and less than or equal to 1.1.

In some embodiments, the portable suction device further includes a battery pack mounting portion for engaging the battery pack, the battery pack powering the portable suction device, wherein projections of at least two of the motor, the dust container, and the battery pack within a vertical plane perpendicular to the front-rear direction do not overlap.

The portable suction device provided by the present application includes a housing, a battery pack mounting portion, a dust container, and a suction pipe. The battery pack mounting portion is for installing a battery pack, the dust container is disposed within the housing, one end of the suction pipe is connected to the dust container, and another end of the suction pipe extends out of the housing. The thickness of the portable suction device along the front-rear direction is less than or equal to 85mm. By setting the thickness of the portable suction device along the front-rear direction to be less than or equal to 85mm, the overall thickness of the portable suction device is small. This not only results in the portable suction device occupying less space in the vehicle, facilitating storage, but also makes it convenient for users to hold the portable suction device to perform suction operations in relatively crowded environments inside the vehicle, thereby providing a higher user experience.

### BRIEF DESCRIPTION OF THE DRAWINGS

FIG. 1 is an exploded view of a portable suction device according to an embodiment of the present application;
FIG. 2 is a rear view of the portable suction device of FIG. 1;
FIG. 3 is a schematic diagram of the portable suction device of FIG. 1;
FIG. 4 is a schematic diagram of the portable suction device of FIG. 1 with the battery pack and suction accessory removed;
FIG. 5 is a schematic diagram of the portable suction device of FIG. 1 with the battery pack, suction accessory, and suction pipe removed;
FIG. 6 is a schematic diagram of the portable suction device of FIG. 1 with the housing removed;
FIG. 7 is a schematic diagram of another portable suction device according to an embodiment of the present application;
FIG. 8 is a schematic diagram of the portable suction device of FIG. 7 from another perspective;
FIG. 9 is a schematic diagram of the portable suction device of FIG. 7 from another perspective;
FIG. 10 is an internal schematic diagram of the portable suction device of FIG. 7;
FIG. 11 is a side cross-sectional view of the portable suction device of FIG. 10;
FIG. 12 is a schematic diagram of airflow movement inside the portable suction device of FIG. 10;
FIG. 13 is a schematic diagram of airflow flowing inside the motor of the portable suction device of FIG. 10;
FIG. 14 is a front view of the portable suction device of FIG. 7;
FIG. 15 is a top view of the portable suction device of FIG. 7;
FIG. 16 is a schematic diagram of the portable suction device of FIG. 7 viewed from the rear side;
FIG. 17 is a schematic diagram of the portable suction device of FIG. 7 viewed from the top side;
FIG. 18 is a schematic diagram of one application mode of the portable suction device of FIG. 7; and
FIG. 19 is a schematic diagram of another application mode of the portable suction device of FIG. 7.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. **It** should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

The present application provides a portable suction device (10a, 10b). This portable suction device can be used as a vehicle vacuum cleaner inside a vehicle to adsorb dust and other foreign objects within the vehicle, thereby keeping the vehicle environment clean. Of course, besides vehicles, this portable suction device can also be carried personally or used for cleaning environments such as offices.

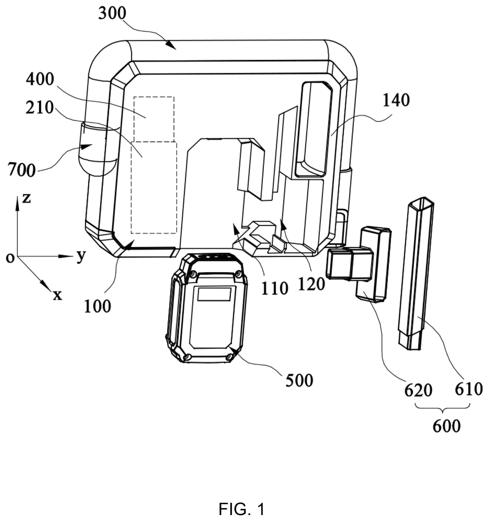

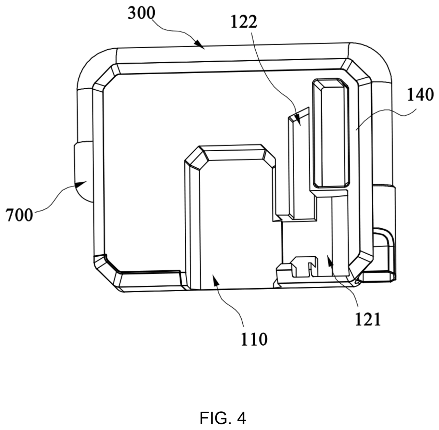

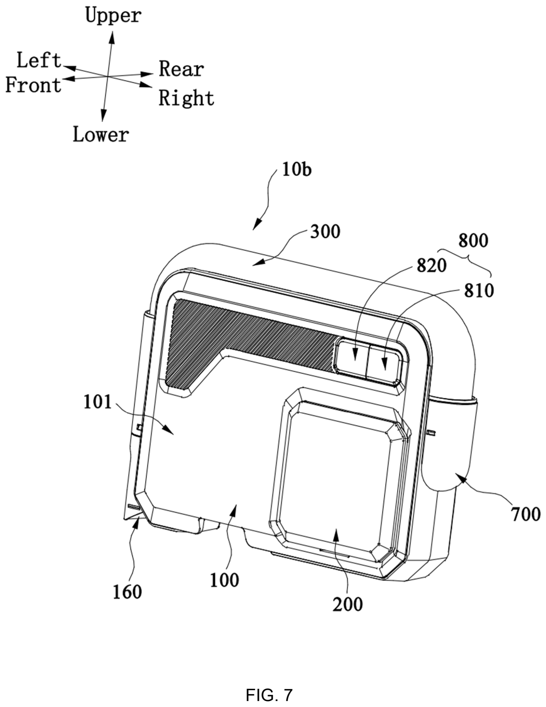

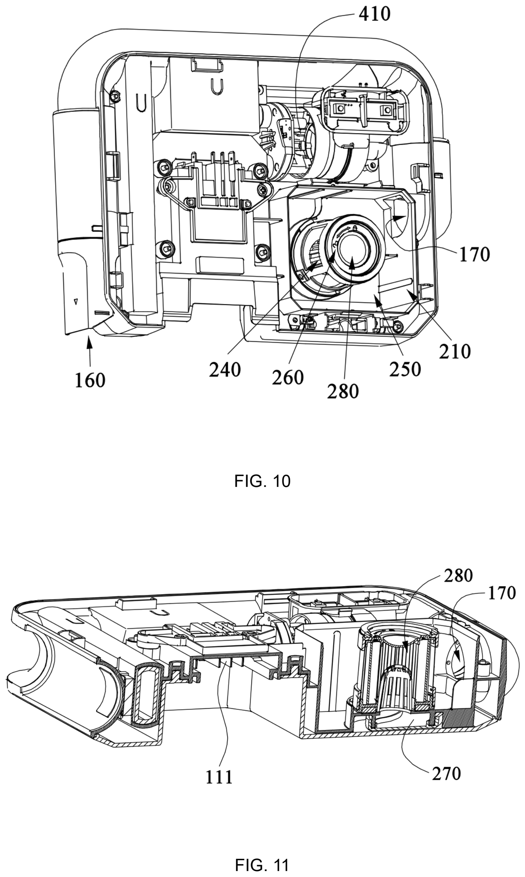

FIGS. 1 to 6 illustrate an embodiment of a portable suction device 10a, and FIGS. 7 to 19 illustrate an embodiment of a portable suction device 10b. Common components between the portable suction device 10a and the portable suction device 10b are not distinguished in reference numerals and naming.

As shown in FIGS. 1 to 18, the portable suction device (10a, 10b) mainly includes a housing 100, a battery pack mounting portion 110, a dust container 210, a suction pipe 300, a motor 400, a battery pack 500, and a suction accessory 600, etc. The housing 100 is a main installation component of the portable suction device. The battery pack mounting portion 110, dust container 210, suction pipe 300, motor 400, battery pack 500, and suction accessory 600 are all installed inside the housing 100 or on the outer wall surface of the housing 100. In one embodiment, at least two of the battery pack mounting portion 110, dust container 210, suction pipe 300, motor 400, battery pack 500, and suction accessory 600 are connected together via the housing 100.

The battery pack mounting portion 110 is used for installing the battery pack 500. It should be noted that the battery pack mounting portion 110 can be integrally formed with the housing 100 during manufacturing process of the housing 100, or it can be an independent component fixed to the housing 100. The dust container 210 is used for collecting dust and other foreign objects adsorbed from the vehicle. The dust container 210 is connected to the housing 100 or installed inside the housing 100. The dust container 210 can also be a structure formed by the housing 100. One end of the suction pipe 300 is a connection end, and the other end is a suction end. The connection end of the suction pipe 300 is connected to the dust container 210, and the suction end of the suction pipe 300 can be connected to at least the suction accessory 600. The motor 400 is used to generate negative pressure inside the portable suction device. The battery pack 500 is connected to the motor 400 and is used to supply power for the operation of the motor 400. The battery pack 500 is detachably connected to the housing 100. In some embodiments, the battery pack 500 can also be a built-in battery pack, thus being non-detachably disposed inside the housing 100.

The working principle of the portable suction device is as follows: The motor 400 drives the blades 410 to rotate at high speed, thereby generating negative pressure inside the housing 100. Under the negative pressure, foreign objects in the vehicle are adsorbed by the suction accessory 600 into the suction pipe 300. The foreign objects pass through the suction pipe 300 and enter the dust container 210. The gas in the dust container under negative pressure passes through a filter element and is discharged from the exhaust port 150 on the motor side. To clean the foreign objects in the dust container 210, the foreign objects can be removed from the portable suction device by disassembling or opening the dust container 210.

To facilitate the description of the structure of the portable suction device, a front-rear direction of the portable suction device is defined as a x-direction in FIG. 1, a left-right direction of the portable suction device is defined as a y-direction in FIG. 1, and a up-down direction of the portable suction device is defined as a z-direction in FIG. 1. The x, y, and z directions are mutually perpendicular.

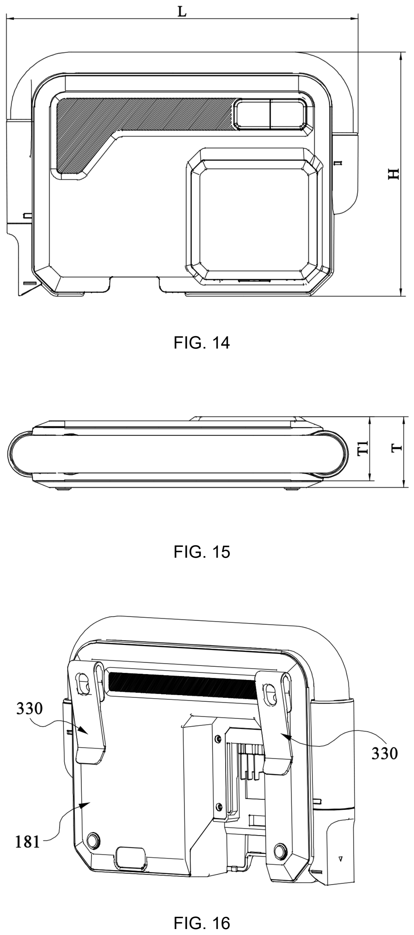

With reference to FIGS. 14 and 15, the portable suction device is substantially cuboid shaped, and the minimum value among the length L, height H, and thickness T of the cuboid is less than or equal to 85mm. In some embodiments, the minimum value among the length L, height H, and thickness T of the cuboid is less than or equal to 80mm. In some embodiments, the minimum value among the length L, height H, and thickness T of the cuboid is less than or equal to 75mm. In some embodiments, the minimum value among the length L, height H, and thickness T of the cuboid is less than or equal to 70mm. In some embodiments, the minimum value among the length L, height H, and thickness T of the cuboid is less than or equal to 65mm. In some embodiments, the minimum value among the length L, height H, and thickness T of the cuboid is less than or equal to 60mm. In some embodiments, the minimum value among the length L, height H, and thickness T of the cuboid is less than or equal to 55mm. That is, the minimum value of the maximum thickness of the portable suction device in any direction is greater than or equal to 85mm, 80mm, 75mm, 70mm, 65mm, or 60mm. It should be noted that the cuboid here refers to the state where the suction pipe 300 is stored cling to the housing 100 and the dust cover 220 is closed (as shown in FIG. 1).

In some embodiments, the thickness of the portable suction device along the x-direction is less than or equal to 65mm. This configuration makes the thickness of the portable suction device small, resulting in a smaller space occupation. On one hand, the portable suction device can be stored in storage bags behind seats, storage spaces in doors, and glove compartments in the front of the car, facilitating storage. On the other hand, one end of the portable suction device can be placed in the user's thumb web, making it convenient for the user to hold the portable suction device. The user can operate it more easily in narrow environments such as inside the vehicle, improving the user experience.

In some specific embodiments, the thickness T of the portable suction device along the x-direction is less than or equal to 60mm; in some other specific embodiments, the thickness T of the portable suction device along the x-direction is less than or equal to 55mm; in still other specific embodiments, the thickness T of the portable suction device along the x-direction is less than or equal to 50mm.

In some embodiments, the length L of the portable suction device along the y-direction is less than or equal to 300mm, or less than or equal to 280mm, or less than or equal to 250mm. This configuration further reduces the volume of the portable suction device, making it more compact.

In some embodiments, the height H of the portable suction device along the z-direction is less than or equal to 250mm, or less than or equal to 240mm, or less than or equal to 230mm, or less than or equal to 220mm. This configuration further reduces the volume of the portable suction device, making it more compact.

In some embodiments, an outer diameter of the motor 400 is less than or equal to 50mm, or less than or equal to 45mm, or less than or equal to 40mm.

In some embodiments, the ratio of the thickness of the portable suction device along the front-rear direction to the thickness of the battery pack 500 along the front-rear direction is greater than or equal to 0.5.

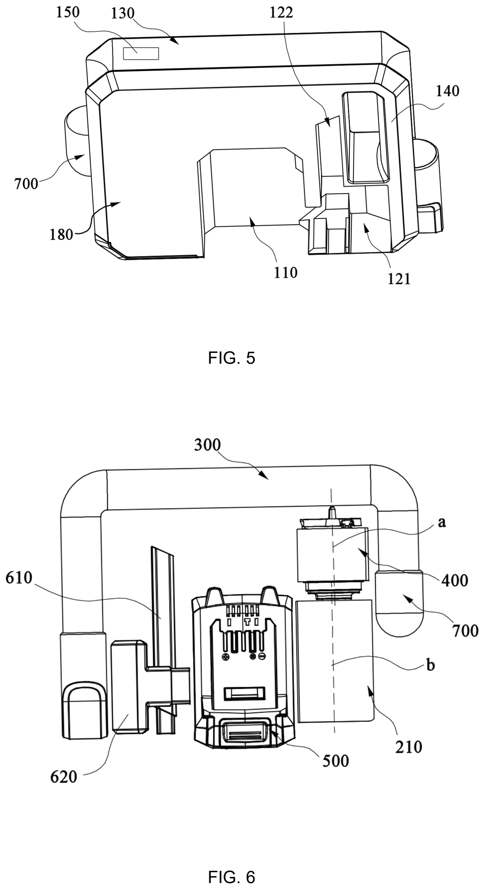

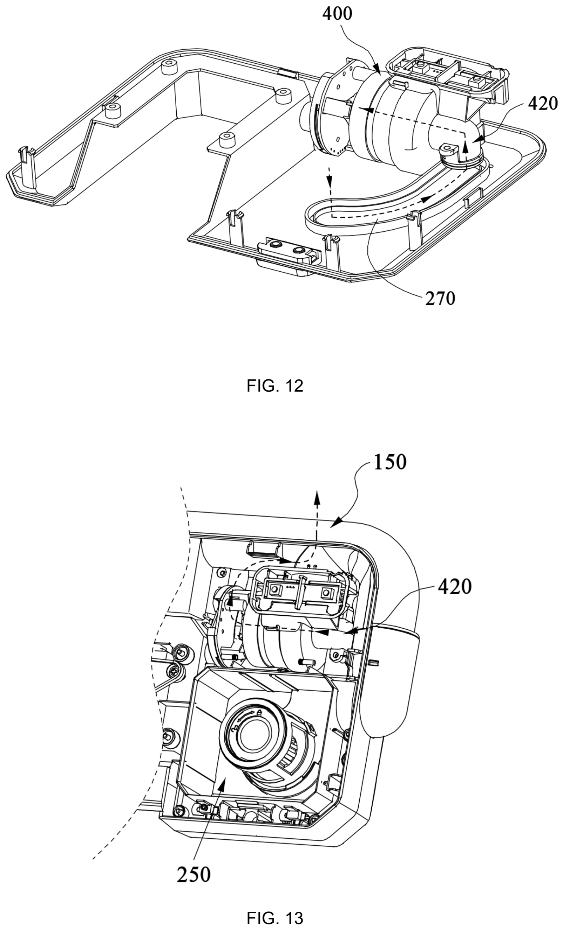

As shown in FIG. 6, in some embodiments, the dust container 210 is cylindrical. As shown in FIG. 13, in some other embodiments, the dust container 210 is cuboid. In still other embodiments, the dust container 210 is partly cylindrical, and the remaining part extends from one side of the cylinder and connects to the suction pipe 300, i.e., the dust container 210 is an irregular box similar to a "tree branch".

To achieve quick installation and removal of the battery pack 500 on the battery pack mounting portion 110, the battery pack mounting portion 110 includes a plug-in structure 111. The battery pack 500 is plugged into the plug-in structure 111 along a first direction, and the first direction is parallel to the z-direction. One of the battery pack mounting portion 110 and the battery pack 500 is provided with a plug-in block, and the other is provided with a plug-in slot. Of course, in some other embodiments, the first direction can also be parallel to the y-direction or the x-direction, or form a certain angle with the z-direction. That is, the battery pack 500 could be inserted/removed along the up-down direction, left-right direction, or front-rear direction, it can also be inserted/removed in other directions, which is not limited here.

In some embodiments, a first projection of the battery pack 500 within a first plane perpendicular to the z-direction (i.e., the x-o-y plane) falls within a second projection of the portable suction device within the first plane. That is, after the battery pack 500 is installed to the battery pack mounting portion 110, it does not exceed the boundary of the housing 100 in the x-direction.

In some embodiments, the portable suction device can be powered by different battery packs, for example, it can be powered by a first battery pack or a second battery pack. That is, the battery pack mounting portion 110 can install the first battery pack or the second battery pack. Herein, the electrical parameters of the first battery pack and the second battery pack are different. The electrical parameters here can be a rated voltage, a maximum output power, etc. In other embodiments, the volumes of the first battery pack and the second battery pack can also be different.

In some specific embodiments, an output power of the first battery pack is greater than or equal to 50W and less than or equal to 200W; an output power of the second battery pack is greater than or equal to 50W and less than or equal to 200W. Exemplarily, the output power of the first battery pack can be 50W, 80W, 100W, 120W, 150W, or 200W, and the output power of the second battery pack can be 50W, or 100W, or 120W, or 150W, or 200W. The output power of the battery pack 500 is the operating power of the portable suction device. That is, the output power of the portable suction device at a maximum speed level is greater than or equal to 50W and less than or equal to 200W, specifically, it can be 80W, 100W, 110W, 120W, 130W, 140W, or 150W.

In some specific embodiments, a rated voltage of the first battery pack and a rated voltage of the second battery pack can be any voltage value between 12V and 40V. For example, the rated voltage of the first battery pack can be 8V, 12V, 16V, 20V, 24V, 30V, 36V, 40V, etc.; the rated voltage of the second battery pack can be 8V, 12V, 16V, 20V, 24V, 30V, 36V, 40V, etc.

To facilitate the user to hold the portable suction device, a portion of the housing 100 structure is recessed inward or protrudes outward to form a grip portion 140. The grip portion 140 is for the user to hold.

A third projection of the grip portion 140 within a first plane perpendicular to the z-direction falls within a second projection of the portable suction device within the first plane.

In the technical solution shown in FIGS. 7 to 14, the suction pipe 300 has one end connected to the housing 100, i.e., the connector 700. The suction pipe 300 also includes another end opposite to the connector 700, i.e., the air inlet portion 161 on the suction pipe 300 for the inflow of external air into the suction pipe 300. The opening formed at the connection between the connector 700 and the housing 100 is the dust inlet 170, and the opening formed by the air inlet portion 161 is the suction port 160. It can also be said that the dust inlet 170 is provided at the connection between the suction pipe 300 and the dust collection device 200, and allows airflow to flow from the suction pipe 300 into the dust collection device 200.

The housing 100 has a dust cover 220 opposite the dust container 210. The dust container 210 has a dust outlet, and the dust cover 220 is openably and closably connected at the dust outlet. In some embodiments, by pressing the dust cover, the dust cover can be rotated relative to the dust container 210, thereby opening or closing the dust outlet.

The filter element 240 is also provided inside the dust container 210. The filter element 240 can filter the air, trapping foreign objects from the air inside the dust container 210. One end of the filter element is connected to a rear end of the motor 400. The motor 400 rotates to generate negative pressure, so that the gas inside the filter element is discharged from the exhaust port 150 on the motor side.

To facilitate pouring the foreign objects from the dust container 210 into a trash can without contaminating user's hands during a pouring process, the dust collection device 200 further includes a first button 230. By operating the first button 230, the dust cover 220 can be moved to open the dust outlet 250. The operation here can be pressing, touching, pushing, etc. How to operate the first button 250 to drive the movement of the dust cover is known art and will not be described in details here. In one embodiment, the dust collection device 200 of the portable suction device has a one-touch ejection function. That is, by operating the first button 230, the dust cover 210 can be quickly ejected. When using the first button 230, the user can invert the portable suction device to face the trash can and operate the first button 230 to achieve rapid dust discharge.

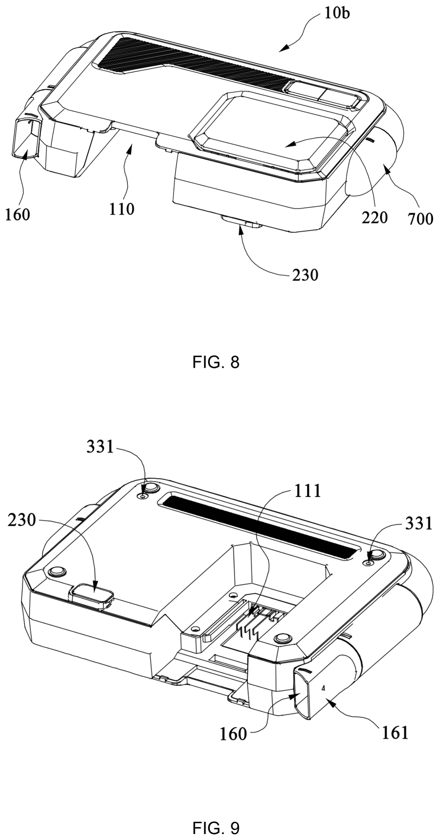

In one implementation, the portable suction device further includes a second button 260. By operating the second button 260, the dust container 210 and/or the filter element 240 located within the dust container 210 can be unloaded. The operation here can be rotating, pressing, or touching. In one embodiment, as shown in FIG. 9, the filter element 240 is disassembled by rotating the second button 260. How to operate the second button 260 to unload the dust container 210 or the filter element 240 is known art and will not be described in details here. Besides the cylindrical or conical shape disclosed in this application, the filter element 240 can also be cuboid, which is not limited here.

Of course, in some other embodiments, the first button 230 and the second button 260 can be integrated into one button, achieving the movement of the dust cover 220, the unloading of the dust container 210, or the unloading of the filter element 240 by pressing for different durations.

As shown in FIG. 6, a central axis of the motor 400 is a motor axis a, and the motor 400 can rotate about the motor axis. A central axis of the dust container 210 is a dust container axis b. The motor axis a and the dust container axis b are arranged in parallel. In one embodiment, the motor axis a of the motor 400 and the central axis b of the dust container 210 can also be collinear. Continuing with reference to FIG. 6, the battery pack 500 is arranged on one side of the motor 400 and the dust container 210, and the suction accessory 600 is arranged on the other side of the battery pack 500, i.e., the suction accessory 600, the battery pack 500, and a combined component of the motor 400 and the dust container 210 are arranged sequentially in the y-direction. This arrangement makes the arrangement of various components within the portable suction device reasonable and easier to achieve miniaturization of the portable suction device.

In some embodiments, the projections of the motor 400, the dust container 210, the suction pipe 300, and the battery pack 500 within a vertical plane perpendicular to the front-rear direction (i.e., the y-o-z plane) do not overlap. That is, the aforementioned components are basically laid out flat inside and outside the housing 100, thereby ensuring that the overall thickness of the suction device is small.

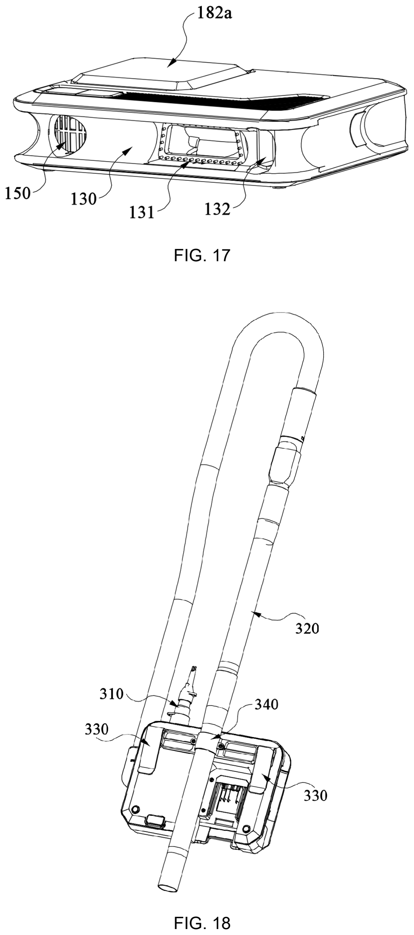

Referring to FIGS. 6 and 17, an exhaust port 150 is provided on the housing 100, and the exhaust port 150 is located near the motor 400. In some embodiments, the exhaust port 150 is provided directly above the motor 400. In some other embodiments, a portion of the housing 100 structure is recessed inward to form a receiving groove 130. The receiving groove 130 is for accommodating the suction pipe 300, and the exhaust port 150 is provided within the receiving groove 130.

The following provides additional description of the technical solutions that differ between the portable suction device 10b shown in FIGS. 7 to 13 and the portable suction device 10a shown in FIGS. 1 to 6.

The portable suction device 10b is formed by connecting a device body 101 and the suction pipe 300. The device body 101 at least includes the housing 100, the battery pack 500, and the motor 400. The housing 100 forms an accommodation space. The accommodation space of the housing 100 at least accommodates the motor 400 and the dust container 210. At least a portion of the housing 100 opposite the dust container 210 in the front-rear direction is made of a transparent component. A battery engagement portion 110 is formed on the device body 101 and is used for installing the battery pack 500. The dust container 210 is disposed within the device body 101. The suction pipe 300 can be stored in the device body 101. The mass of the device body 101 is less than or equal to 3kg. In some embodiments, the mass of the device body 101 can be 2.8kg, 2.5kg, 2.2kg, 2kg, 1.7kg, or 1.5kg.

In this embodiment, a dust guide channel 270 is provided inside the housing 100. A filter element 240 for filtering airflow is provided inside the dust container 210. The dust guide channel 270 connects the filter element 240 and the motor 400. After airflow enters the dust container 210, it is filtered by the filter element 240 and then flows into the dust guide channel 270, and then flows to the motor 400 through the dust guide channel 270.

The dust guide channel 270 is provided within the accommodation space formed by the contact between the dust container 210 and the housing 100. The filter element 240 is formed by a circle of filter paper 280, forming a cylindrical or conical shape. The middle of the filter element 240 is a hollow air storage structure 290. During the process where the airflow to be filtered flows from the outside of the filter paper 280 to the air storage structure 290 inside the filter paper 280, impurities and other substances in the airflow are blocked outside the filter paper 280. The starting end of the dust guide channel 270 is located at the bottom of the air storage structure 290 of the filter element 240, and the terminal end is connected to the airflow connection pipe 420 between the motor 400 and the housing 100. When the inhaled airflow falls from the filter element 240 to the dust guide channel 270, a displacement direction of the airflow is from a position with a shallower depth of the dust container 210 to a position with a deeper depth of the dust container 210. The airflow flows in from the suction port 160 of the suction pipe 300, flows into the dust container 210 from the dust inlet 170, is filtered by the filter element 240, then descends to the dust guide channel 270, flows into the motor 400 within the dust guide channel 270, flows to the end of the blades 410 of the motor 400, and is then discharged from the exhaust port 150 (see FIGS. 6, 13, and 17).

The maximum depth of the dust container 210 along the front-rear direction is greater than or equal to 30mm and less than or equal to 80mm. In some embodiments, the maximum depth of the dust container 210 along the front-rear direction can be 40mm, 45mm, 50mm, 55mm, or 60mm. Defining the maximum depth of the dust container 210 as the dust container depth T1, the ratio of the dust container depth T1 to the thickness T of the portable suction device is greater than or equal to 0.7 and less than or equal to 1.1. In some embodiments, the ratio of the dust container depth T1 to the thickness T of the portable suction device can be 0.8, 0.85, 0.9, or 1.

When the dust cover 220 is opened, the user aims the front side of the portable suction device 10b at the trash can and relies on the inertia and gravity of the dust cover 220 popping open to pour out the dust and impurities in the dust container 210. The plane in which the dust outlet 250 lies is perpendicular to the front-rear direction, and the direction in which the dust outlet 250 discharges dust is basically from the rear side to the front side of the portable suction device 10b. That is, the user aims the portable suction device 10b in the state shown in FIG. 9 at the trash can and presses the first button 230 simultaneously, thereby pouring out the dust without hassle.

An area of the dust outlet 250 is greater than or equal to 3500 square millimeters. In some embodiments, the area of the dust outlet 250 can be 3600 square millimeters, 3800 square millimeters, 4200 square millimeters, 4500 square millimeters, 5000 square millimeters, etc. A numerical value of a ratio of the area of the dust outlet 250 of the dust container 210 to the maximum depth of the dust container 210 along the front-rear direction is greater than or equal to 80. In some embodiments, the numerical value of the ratio of the area of the dust outlet 250 of the dust container 210 to the maximum depth of the dust container 210 along the front-rear direction is greater than or equal to 100, 120, or 140. It should be noted that this ratio value does not include units, and in the calculation process, it is necessary to ensure that the area and depth use a same series of units. For example, when the unit of area is square millimeters, the unit of depth should be millimeters. This configuration can make the dust discharge efficiency of the dust container 210 higher.

In some common suction devices, the arrangement structure of the dust container 210 and the motor 400 is mostly similar to the arrangement in FIG. 7, i.e., the motor 400 and the dust container 21 are arranged in a "1" shape and directly connected, and the airflow flows directly from the dust container 21 into the motor 400. Therefore, if a portable suction device in the related art wants to be sufficiently "thin", the area of its dust outlet 250 will also be affected by the overall thickness, making it difficult to enlarge the dust outlet 250. This solution changes the arrangement of the dust container 210 and the motor 400 from overlapping vertically to "spreading out" on a plane perpendicular to the vertical direction, simultaneously meeting the user's needs for a large dust outlet and a thin overall device.

It should be noted that the extension direction of the dust container 210 here is the direction in which the airflow falls when moving inside the dust container 210, that is, the direction from front to back.

Defining a volume within a outer boundary of the housing 100 as a total volume of the portable suction device 10b. The total volume is less than or equal to 4500 cubic centimeters. In one embodiment, the total volume of the portable suction device 10b is less than or equal to 4000 cubic centimeters. In one embodiment, the total volume of the portable suction device 10b is less than or equal to 3500 cubic centimeters. In one embodiment, the total volume of the portable suction device 10b is less than or equal to 3000 cubic centimeters.

The portable suction device 10b further includes a switch device 800 for the user to control the operating state of the motor 400. The switch device includes a first operating member 810 and a second operating member 820. The first operating member 810 is used to turn on or off the operation of the motor 400 of the portable suction device 10b. The second operating member 820 is configured to adjust the suction capability. When the user presses the first operating member 810, the portable suction device 10b operates at the level with the maximum suction capability. When the user presses the second operating member 820, the suction capability decreases. In another embodiment, when the user presses the first operating member 810, the portable suction device 10b operates at a level with moderate suction capability, and when the user presses the second operating member 820, the suction capability is adjusted to the maximum.

In some embodiments, the exhaust port 150 can be connected to an inflation accessory 310 (see FIG. 18) to inflate an external device. In one embodiment, the inflation accessory is an inflation nozzle, and the external device can be a swimming ring, balloon, etc.

In some embodiments, the housing 100 is cuboid-shaped. The receiving groove 130 is a U-shaped groove opened on multiple side wall surfaces of the housing 100. The suction pipe 300 is wound around the housing 100 and is roughly bent into a U-shape. It should be noted that if the cuboid boundary of the housing 100 has large-radius chamfers or rounded corners but still presents the "flat" structure of this application, it should also fall within the protection scope of this application.

In some embodiments, the suction pipe 300 is fixed in the receiving groove 130 by magnetic attraction; in some other embodiments, the suction pipe 300 is snap-fitted into the receiving groove 130 by a buckle method.

To make the suction pipe 300 easy to store in the receiving groove 130, in some embodiments, at least a portion of the suction pipe 300 is a soft pipe, so that the suction pipe 300 can be bent and deformed.

In some embodiments, the suction pipe 300 is a telescopic pipe, and the extended length of the suction pipe 300 is greater than or equal to 40cm and less than or equal to 150cm. Setting the suction pipe 300 as a telescopic pipe makes it possible that when the suction pipe 300 is taken out of the receiving groove 130, the components of the portable suction device except for the suction pipe 300 and the suction accessory 600 can remain stationary. Only the telescopic property of the suction pipe 300 allows the suction accessory 600 to move to the surface or gap to be cleaned. For the user, holding of the housing 100 is avoided, and the user experience's experience is further improved. As shown in FIG. 16, to facilitate the placement of the portable suction device and improve its stability inside the vehicle, in some embodiments, the portable suction device further includes a clamping member 330. The clamping member 330 can clamp and fix the portable suction device to an external structure. The external structure here specifically refers to components inside the vehicle, such as storage pockets on seat backs, storage spaces in doors, etc. Clamping and fixing the portable suction device to an external structure can prevent the portable suction device from being damaged due to shaking during vehicle movement.

In some embodiments, the clamping member 330 is fixedly connected to the outer wall surface of the housing 100 or detachably connected to the outer wall surface of the housing 100. Fixed connection methods include but are not limited to adhesion, welding. Detachable connection methods include but are not limited to screw connection, magnetic attraction, etc. Of course, besides being provided on the housing 100, the clamping member can also be provided on the battery pack 500 or the suction pipe 300, as long as it can achieve fixation of the portable suction device. The number of clamping members 330 can be set to one or more according to requirements. FIG. 16 shows two clamping members 330. With reference to FIG. 9, two installation holes 331 are provided on the housing 100. Screws pass through the clamping member 330 and screw into the installation holes 331 to fix the clamping member 330 and the housing 100.

In some embodiments, the clamping member 330 is a metal clip or a plastic clip.

In some embodiments, the clamping member 330 is a spring clip or a duckbill clip.

In some embodiments, to improve the stability of the portable suction device when installed on an external structure, the clamping member 330 is provided at the center of gravity of the entire portable suction device, or above the center of gravity of the entire portable suction device.

Of course, besides using the clamping member 330 to fix the portable suction device, a magnetic member can also be provided on the portable suction device. The magnetic member is used to adsorb the portable suction device onto a metal component inside the vehicle, thereby achieving fixation of the portable suction device and preventing it from being damaged due to shaking during vehicle movement.

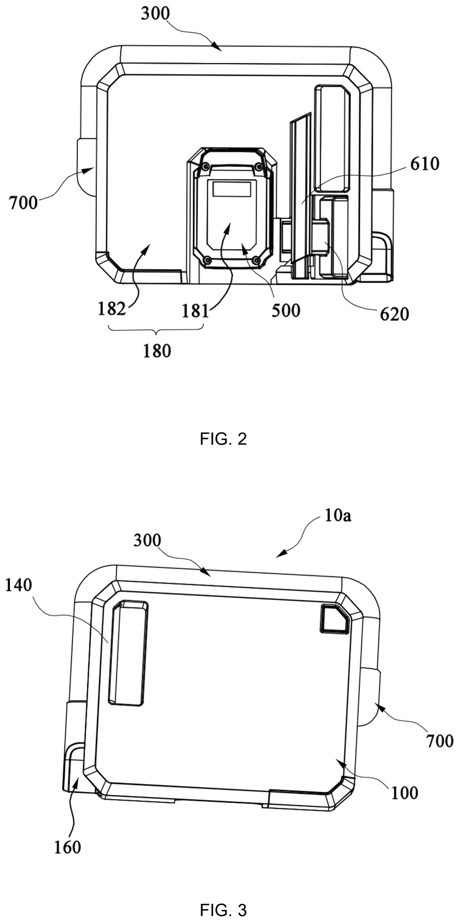

To allow the portable suction device to be stably placed on an external placement platform, the portable suction device has at least one placement surface 180 (see FIGS. 2 and 5). With the placement surface facing downward, the portable suction device can be stably placed on an external placement platform. The external placement platform here can be a control console, seat, or storage box inside the vehicle, etc.

The insertion/removal direction of the battery pack 500 is along the up-down direction of the portable suction device. In some embodiments, the insertion/removal direction of the battery pack 500 can be any direction within the vertical plane formed by the up-down direction and the left-right direction of the portable suction device (i.e., the y-o-z plane). The advantage of this configuration is that when replacing battery packs 500 with different capacities and thicknesses, the outer casing of the battery pack 500 can be lower than the housing 100 or basically flush with the housing 100, thus not affecting the flatness of the overall shape of the portable suction device and the stability during placement.

To improve the placement flexibility of the portable suction device, in some embodiments, the placement surface 180 includes a first placement surface 181 and a second placement surface 182. The first placement surface is formed on the battery pack 500, and the second placement surface is formed on the housing 100. The second placement surface 182 and the first placement surface 181 are parallel or perpendicular to each other. Of course, in other embodiments, the number of placement surfaces can be further increased according to requirements. For example, the portable suction device in the stored state can be designed to be cuboid-shaped, so that the portable suction device has six placement surfaces.

In the portable suction device 10b, the dust cover 220 is provided on the opposite side of the placement surface 180. In other words, when the dust cover 220 is located on the front side of the portable suction device 10b, the placement surface 180 is the rear side surface of the housing 100 of the portable suction device 10b.

The motor axis a of the motor 400 is substantially perpendicular to the front-rear direction of the portable suction device 10b, and the motor axis a of the motor 400 is also substantially perpendicular to the left-right direction of the portable suction device 10b. The dust container axis b of the dust container 210 is perpendicular to the motor axis a. The dust container axis b is perpendicular to the placement surface 180, and the extension direction of the dust container axis b is the depth direction of the dust container 210. In this embodiment, the direction of the dust container axis b is also the direction of the central axis of the filter element 240. The projections of the motor 400 and the dust container 210 on a plane of the outer surface of the dust cover 220 do not overlap. The projections of the motor 400 and the battery pack 500 on the plane of the outer surface of the dust cover 220 do not overlap. The projections of the dust container 210 and the battery pack 500 on the plane of the outer surface of the dust cover 220 do not overlap. The projections of the motor 400, the dust container 210, and the battery pack 500 on the plane of the outer surface of the dust cover 220 do not overlap. The projections of the motor 400, the dust container 210, the battery pack 500, and the suction pipe 300 on the plane of the outer surface of the dust cover 220 do not overlap. The plane of the outer surface of the dust cover 220 (i.e., the y-o-z plane) is also a vertical plane perpendicular to the front-rear direction. In this embodiment, the dust outlet 250 forms a dust discharge plane, and the dust discharge plane is parallel to the outer surface of the dust cover. That is, the projections of at least two of the motor 400, the dust container 210, the battery pack 500, and the suction pipe 300 on the dust discharge plane do not overlap. When the accumulated impurities in the dust container 210 are poured out in a direction perpendicular to the dust discharge plane, the efficiency of emptying the dust container 210 is the highest.

Combining the portable suction device 10a and the portable suction device 10b, the motor axis a of the motor 400 can be parallel or perpendicular to the dust container axis b of the dust container 210. In other embodiments, the motor axis a and the dust container axis b can also form an angle.

To achieve the connection between the suction pipe 300 and the housing 100, continuing with reference to FIG. 1, the portable suction device further includes a connector 700 disposed on the housing 100. The connector 700 is used to connect the dust container 210 and the suction pipe 300.

In some embodiments, the connector 700 is a pipe fitting. One end of the pipe fitting is fixed on the outer wall surface of the housing 100, and the pipe fitting communicates with the inner cavity of the housing 100. Another end of the pipe fitting forms an insertion port. The connection end of the suction pipe 300 is inserted into the pipe fitting through the insertion port.

It should be noted that the dust container 210 and the connector 700 can be directly connected, or can be connected via an intermediate member. The intermediate member can be a connection block. Further, a filter screen is provided at the connection between the dust container 210 and the connector 700. The filter screen is used to filter the airflow.

To allow the portable suction device to carry the suction accessory 600 during movement and prevent the suction accessory 600 from being lost due to separate storage, the portable suction device further includes an accessory mounting portion 120 (see FIG. 3). The accessory mounting portion 120 can be an independent component fixed to the housing 100, or can be formed by a portion of the housing 100 structure recessed inward. The accessory mounting portion 120 is used to mount at least one suction accessory 600.

Continuing with reference to FIG. 1, the suction accessory 600 provided in the embodiment of this application includes a tube suction head 610 and a T-shaped suction head 620. The tube suction head 610 is "1" shaped. One end thereof can be continuously connected to the suction end of the suction pipe 300, and the other end forms a suction port. Because this tube suction head 610 is relatively slender, the size of the suction port is small. The tube suction head 610 can extend into narrow gaps to adsorb foreign objects. The vertical segment of the T-shaped suction head 620 can be continuously connected to the suction end of the suction pipe 300, and the horizontal segment forms a larger suction port. This T-shaped suction head 620 is suitable for adsorbing foreign objects on flat surfaces.

Further, the accessory mounting portion 120 is a groove formed on the housing 100. To install the tube suction head 610 and the T-shaped suction head 620, the accessory mounting portion 120 includes a first installation groove 121 and a second installation groove 122. The first installation groove 121 is roughly T-shaped and is used to accommodate the T-shaped suction head 620. The second installation groove 122 is roughly "1" shaped and is used to accommodate the tube suction head 610.

It should be noted that the first installation groove 121 and the second installation groove 122 can be two independent grooves or two interconnected grooves. To save space, as shown in FIGS. 1 and 2, the first installation groove 121 and the second installation groove 122 partially overlap, and the second installation groove 122 is located in front of the first installation groove 121. When assembling the suction accessory 600, the T-shaped suction head 620 needs to be placed in the first installation groove 121 first, and then the tube suction head 610 is placed in the second installation groove 122. When disassembling the suction accessory 600, the tube suction head 610 is disassembled first, and then the T-shaped suction head 620 is disassembled. The disassembly/assembly directions of the tube suction head 610 and the T-shaped suction head 620 are parallel to the x-direction.

It should be further noted that after the tube suction head 610 and the T-shaped suction head 620 are installed into the corresponding installation grooves, the tube suction head 610 and the T-shaped suction head 620 can be completely sunk into the installation grooves, so that the suction accessory 600 is lower than the plane of the housing 100 forming the accessory mounting portion 120. Of course, in other embodiments, the suction accessory 600 can also partially protrude from the plane of the housing 100 forming the accessory mounting portion 120, or the suction accessory 600 can be flush with the plane of the housing 100 forming the accessory mounting portion 120.

Additionally, after the battery pack 500 is installed to the battery pack mounting portion 110, the surface of the battery pack 500 can be lower than the plane of the housing 100 forming the battery pack mounting portion 110. Or, the surface of the battery pack 500 can be flush with the plane of the housing 100 forming the battery pack mounting portion 110. Or, the surface of the battery pack 500 can be higher than the plane of the housing 100 forming the battery pack mounting portion 110.

To improve the portability of the portable suction device, in some embodiments, the portable suction device further includes a shoulder strap. The entire portable suction device can be hung on the user's body or on the equipment using it via the shoulder strap. The portable vacuum cleaner provided by the embodiment of this application has high portability due to its small volume, small thickness, and the presence of a shoulder strap.

As shown in FIG. 17, in one embodiment, the upper part of the portable suction device 10b is provided with an accessory mounting portion from the receiving groove 130 towards the inside of the housing. The accessory mounting portion includes a brush mounting portion and a flat nozzle mounting portion, for storing a brush 131 and a flat suction nozzle 132 respectively. The stored brush 131 and flat suction nozzle 132 do not affect the storage of the suction pipe 300 in the receiving groove 130. At the same time, the stored suction pipe 300 covers the accessories, which is beneficial for the aesthetics of the entire machine.

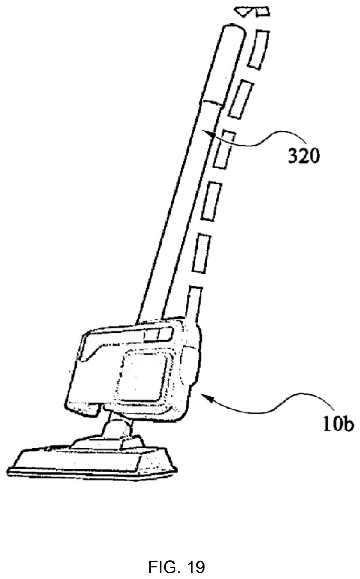

As shown in FIGS. 18 and 19, the portable suction device can be used with a long suction pipe 320. An extended total length of the long suction pipe 320 is greater than or equal to 100cm. The bottom surface of the housing 100 of the portable suction device is provided with a long pipe mounting portion 340. The long suction pipe 320 can be installed to the housing 100 via the long pipe mounting portion 340, so that the portable suction device can be installed to the long suction pipe 320 for use, or to facilitate the storage of the long suction pipe 320. The long pipe mounting portion 340 is composed of a protective sleeve and screws. The shape of the protective sleeve matches the external contour of the suction pipe 300 or the long suction pipe 320. Two screw holes are made on the surface of the protective sleeve. Two screws respectively pass through the two screw holes of the protective sleeve to fix the protective sleeve and the housing 100. With this configuration, the device body 101 of the portable suction device 10b can be fixed to an external suction pipe or suction head for use via the long pipe mounting portion 340, as shown in FIG. 19.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A portable suction device, comprising:
a housing;
a motor having blades capable of generating negative pressure, and a central axis of the motor is a motor axis; and
a suction pipe that absorbs foreign objects and guides them to a dust container for containing the foreign objects;
wherein,
the portable suction device is powered by a battery pack;
the housing is cuboid-shaped; and
a thickness of the portable suction device along a front-rear direction is less than or equal to 85mm.

2. The portable suction device according to claim 1, wherein a radial dimension of the motor is less than or equal to 50mm.

3. The portable suction device according to claim 1, wherein the housing at least accommodates the motor and the battery pack.

4. The portable suction device according to claim 1, wherein a length of the portable suction device along a left-right direction is less than or equal to 300mm.

5. The portable suction device according to claim 1, wherein a height of the portable suction device along an up-down direction is less than or equal to 250mm.

6. The portable suction device according to claim 1, wherein the portable suction device further comprises a connector disposed on the housing, and the connector connects the dust container and the suction pipe.

7. The portable suction device according to claim 1, wherein a portion of the housing is recessed inward to form an accessory mounting portion, the accessory mounting portion in configured for mounting at least one suction accessory, and the suction accessory is mounted to another end of the suction pipe.

8. The portable suction device according to claim 1, wherein an output power of the portable suction device at a maximum speed level is greater than or equal to 50W and less than or equal to 200W.

9. The portable suction device according to claim 1, wherein the portable suction device further comprises a battery pack mounting portion for installing the battery pack, the battery pack mounting portion is capable of installing at least a first battery pack or a second battery pack, wherein electrical parameters of the first battery pack and the second battery pack are different.

10. The portable suction device according to claim 1, wherein the portable suction device further comprises a clamping member installed on the housing, and the clamping member is configured to clamp and fix the portable suction device to an external structure.

11. The portable suction device according to claim 10, wherein the clamping member is detachably connected to the housing.

12. The portable suction device according to claim 1, wherein the portable suction device further comprises a battery pack mounting portion for installing a battery pack, the battery pack powers the portable suction device, and projections of at least two of the motor, the dust container, the battery pack, and the suction pipe on a vertical plane perpendicular to the front-rear direction do not overlap.

13. The portable suction device according to claim 1, wherein the portable suction device further comprises a battery pack mounting portion for installing a battery pack, the battery pack powers the portable suction device, the dust container comprises a dust cover, the dust cover is openable or closable to discharge dust from the dust container, and projections of at least two of the motor, the dust container, the battery pack, and the suction pipe on an outer surface of the dust cover do not overlap.

14. The portable suction device according to claim 1, wherein a central axis of the motor is a motor axis, a central axis of the dust container is a dust container axis, the motor axis is perpendicular to the front-rear direction of the portable suction device, and the dust container axis is perpendicular to the motor axis.

15. The portable suction device according to claim 1, wherein the portable suction device further comprises an accessory mounting portion configured to mount a suction accessory, when the suction pipe is stored in the housing, at least partially of the accessory mounting portion is covered.

16. The portable suction device according to claim 1, wherein a maximum depth of the dust container along the front-rear direction is greater than or equal to 30mm and less than or equal to 80mm.

17. The portable suction device according to claim 1, wherein a volume within an outer boundary of the housing is defined as a total volume of the portable suction device, the total volume is less than or equal to 4500 cubic centimeters.

18. The portable suction device according to claim 1, wherein the portable suction device is formed by connecting a device body and the suction pipe, the device body at least comprising the housing, the battery pack, and the motor, and a mass of the device body is less than or equal to 3kg.

19. The portable suction device according to claim 1, wherein the dust container comprises a dust outlet for discharging foreign objects, an area of the dust outlet is greater than or equal to 3500 square millimeters, and a plane in which the dust outlet lies is perpendicular to the front-rear direction.

20. The portable suction device according to claim 19, wherein a ratio of the area of the dust outlet of the dust container to a maximum depth of the dust container along the front-rear direction is greater than or equal to 80.

21. A portable suction device, comprising:
a device body including motor, a battery pack, and a housing, the motor is rotatable about a motor axis, the motor is disposed within the housing; the device body forms or connect to a dust container, and the dust container collects adsorbed foreign objects;
a suction pipe having an air inlet portion for inflow of external air, wherein air flows from the air inlet portion into the suction pipe, then flows through the suction pipe to the dust container;
wherein,
the dust container comprises a dust outlet for discharging foreign objects, an area of the dust outlet is greater than or equal to 3500 square millimeters;
a minimum value among a maximum thicknesses of the portable suction device in any direction is less than or equal to 65mm.

22. The portable suction device according to claim 21, wherein the area of the dust outlet is greater than or equal to 4500 square millimeters.

23. The portable suction device according to claim 21, wherein a maximum depth of the dust container is defined as a dust container depth T1, and a ratio of the dust container depth T1 to a thickness T of the portable suction device along a depth direction of the dust container is greater than or equal to 0.7 and less than or equal to 1.1.

24. The portable suction device according to claim 21, further comprises a battery pack mounting portion for installing the battery pack, the battery pack powers the portable suction device, wherein projections of at least two of the motor, the dust container, and the battery pack on a vertical plane perpendicular to the front-rear direction do not overlap.

25. A portable suction device, comprising:
a device body including a motor, a battery pack, and a housing, the motor being rotatable about a motor axis, the motor is disposed within the housing, the device body forms or connects to a dust container, the dust container collects adsorbed foreign objects;
a suction pipe having an air inlet portion for inflow of external air, wherein air flows from the air inlet portion into the suction pipe, then flows through the suction pipe to the dust container;
wherein,
a minimum value among a maximum thicknesses of the portable suction device in any direction is less than or equal to 85mm;
defining a maximum depth of the dust container as a dust container depth T1, a ratio of the dust container depth T1 to a thickness T of the portable suction device along the dust container depth direction is greater than or equal to 0.7 and less than or equal to 1.1.

26. The portable suction device according to claim 25, further comprises a battery pack mounting portion for engaging the battery pack, the battery pack powers the portable suction device, wherein projections of at least two of the motor, the dust container, and the battery pack on a vertical plane perpendicular to the front-rear direction do not overlap.
